# EUROPÄISCHE PATENTSCHRIFT

(11) **EP 2 572 458 B1**
(45) Veröffentlichungstag und Bekanntmachung des Hinweises auf die Patenterteilung: **06.04.2016**
(21) Anmeldenummer: 11721752.1
(22) Anmeldetag: 17.05.2011
(51) Int. Cl.: H04B 7/185

(54) **VERFAHREN ZUR PARALLELEN VERARBEITUNG VON DATENSTRÖMEN MITTELS SATELLITENKOMMUNIKATIONSVERBINDUNGEN**
METHOD FOR THE PARALLEL PROCESSING OF DATA STREAMS BY MEANS OF SATELLITE COMMUNICATION CONNECTIONS
PROCÉDÉ DE TRAITEMENT PARALLÈLE DE FLUX DE DONNÉES AU MOYEN DE LIAISONS DE COMMUNICATION PAR SATELLITE

(30) Priorität: 01.04.2011 DE 102011006618; 17.05.2010 DE 102010029016
(43) Veröffentlichungstag der Anmeldung: 27.03.2013
(60) Teilanmeldung: 13178403.5
(73) Patentinhaber: INRADIOS integrated radio solutions GmbH, 01187 Dresden (DE)
(72) Erfinder: BITTNER, Steffen, 01277 Dresden (DE); KRONDORF, Marco, 01069 Dresden (DE)
(74) Vertreter: Lippert, Stachow & Partner
(86) Internationale Anmeldenummer: PCT/EP2011/057982
(87) Internationale Veröffentlichungsnummer: WO 2011/144620

(56) Entgegenhaltungen:
- EP-A1- 0 929 164
- EP-A2- 1 096 718
- WO-A2-97/27550
- WO-A2-2008/086414
- US-A1- 2002 131 528
- US-A1- 2005 032 472
- US-B1- 6 233 433
- GINIGE T ET AL: "DESIGN OF A TURBO CODED OFDM/CDMA TRANSMITTER-RECEIVER WITH QPSK SIGNAL MAPPING", CONNECTING THE MOBILE WORLD : PROCEEDINGS / IEEE VTS 53RD VEHICULAR TECHNOLOGY CONFERENCE, SPRING, 2001; [IEEE VEHICULAR TECHNOLGY CONFERENCE], IEEE SERVICE CENTER, USA, vol. CONF. 53, 6 May 2001 (2001-05-06), pages 786-790, XP001067068, DOI: 10.1109/VETECS.2001.944486 ISBN: 978-0-7803-6728-9
- CHEN H-H ET AL: "OPTIMIZATION OF TRANSMITTER AND RECEIVER FILTERS FOR OQAM-OFDM SYSTEMS USING NONLINEAR PROGRAMMING", IEICE TRANSACTIONS ON COMMUNICATIONS, COMMUNICATIONS SOCIETY, TOKYO, JP, vol. E80-B, no. 11, 1 November 1997 (1997-11-01), pages 1680-1687, XP000733753, ISSN: 0916-8516

## Beschreibung

Die Erfindung betrifft ein Verfahren zur parallelen Verarbeitung von Datenströmen mittels Satellitenkommunikationsverbindungen, wobei das Verfahren mit einer Betriebsart für einen Datenübertragungsbetrieb, bei welcher Nutzdaten in Form eines Datenstroms über mehrere Träger übertragen werden, betrieben wird.

Bei einer Verarbeitung von Datenströmen mittels Satellitenkommunikation stellen sich im Wesentlichen folgende Anforderungen:
- Effiziente Durchführung von so genannten In Orbit Tests (I0Ts) mit besonderem Fokus auf Messgenauigkeit, Messzeit und geringer Beeinflussung bestehender Kommunikationsverbindungen
- Erhöhung der Datenrate pro Kommunikationsverbindung bei gleichbleibender Belegung des Frequenzspektrums
- Erhöhung der Datenrate pro Transponder/Kanal/Satellit (Datendurchsatz), Verbesserung des Auslastungsgrads (sogenannte Fill-Rate), d.h. möglichst gleichmäßige und vollständige Auslastung verfügbarer Transponderbandbreite und Transponderleistung
- Überwindung von Kapazitätsbegrenzung bedingt durch analoge Störgrößen und Überwindung von Datenratenbeschränkungen aufgrund regulatorischer Limitierungen der Sendeleistung (Frequenz- und Orbitkoordination)

Im Folgenden wird auf die einzelnen oben angeführten Anforderungen eingegangen.

### In Orbit Tests (IOT):

Zur Wahrung von Garantieansprüchen, zur Kontrolle der vertraglich vereinbarten Leistungsparameter bzw. zum Test von Bauelementen im Raumsegment, aber auch zur Messung der Übertragungsqualität werden in regelmäßigen Abständen so genannte In Orbit Tests (IOTs) durchgeführt. Dabei werden die zu vermessenden Satellitenbauteile in der Regel aus dem Nutzbetrieb herausgenommen und mithilfe spezieller Testsignale und Messverfahren vom Boden aus vermessen. Neben den Kosten für die Messungen, welche in der Regel eine Dienstleistung Dritter ist, entstehen hierbei vor allem Umsatzausfälle, da für die Dauer der Messungen keine Gebühren für vermietete Satellitenkapazität erhoben werden können.

Gleichzeitig haben solche IOTs hohe vertragliche Relevanz, da der Satellitenhersteller seinem Kunden, typisch dem Satelliten-Serviceprovider, stets Produktqualität über den gesamten Produktlebenszyklus garantieren muss. Daraus leitet der Serviceprovider dann eine bestimmte Verfügbarkeit der Satellitenverbindung und eine Dienstgüte ab, welche er wiederum dem Endkunden im Rahmen von Service Level Agreements (SLAs) garantiert.

IOTs sind somit notwendig und unabdingbar, denn sie dienen der Feststellung des Trägers der ökonomischen Last unerfüllter SLAs. Die Qualität eines IOT-Konzeptes wird daher in erster Linie anhand der Messgenauigkeit und der notwendigen Messzeit, innerhalb der keine Nutzdaten übertragen werden können, beurteilt. Ein ideales und überlegenes Konzept erlaubt für alle relevanten Messungen die Übertragung von Nutzdaten auch während der Messung. Ferner gestattet es ein solches Konzept dem Nutzer, d.h. dem Betreiber der Kommunikationsverbindung, ohne Mitwirkung von dritter Seite selbständig und im laufenden Betrieb die geforderten Parameter zu vermessen, so dass er den Erfüllungsgrad von ihm zugesicherten SLAs direkt verifizieren kann.

### Datenrate pro Kommunikationsverbindung:

Die Anforderungen an höheren Datenraten pro Kommunikationsverbindung wird immer mehr in den Mittelpunkt zukünftiger Lösungen gestellt. Eine höhere Datenrate erlaubt, mehr Information in einem gleichen Zeitrahmen und ohne Erhöhung des exklusiv benötigten Frequenzspektrums zu übertragen und ist somit von großem wirtschaftlichem Interesse.

### Erhöhung der Datenrate pro Satellit: (Datendurchsatz)

Unter einer Spektrumfragmentierung ist eine meist unregelmäßige Zerteilung eines Frequenzspektrums in informationstragende und ungenutzte Frequenzbereiche zu verstehen. Diese Spektrumfragmentierung stellt Satellitenund Teleportbetreiber vor eine große Herausforderung, denn ungenutztes Spektrum in Verbindung mit bestehenden Leistungsreserven desselben Transponders ist gleichzusetzen mit Gewinneinbußen, welche es zu minimieren gilt. Hierzu ist erläuternd anzumerken, dass ein Satellitenbetreiber stets anstrebt, Transponderleistung und Transponderbandbreite zu gleichen Anteilen der insgesamt verfügbaren Ressourcen zu vermieten. Dies entspricht einer gleichmäßig äquivalenten Aufteilung der verfügbaren Leistung auf die Transponderbandbreite und erlaubt eine wiederum gleichmäßige Auslastung des Transponders in Verbindung mit weiteren operationellen Vorteilen, wie geringer Verluste durch gegenseitige Störungen der Kommunikationsverbindungen untereinander. Zudem trägt das Verfahren der Tatsache Rechnung, dass pro Transponder oft mehrere gleichartige Verbindungen, z.B. mehrere Fernsehkanäle, übertragen werden. Mithin wird nachfolgend davon ausgegangen, dass brach liegende Transponderbandbreite mit einem ebenfalls frei verfügbaren Leistungsäquivalent gleichzusetzen ist.

Meist wird Transponderspektrum zusammen mit dem passenden Leistungsäquivalent von einem Teleportbetreiber bei einem Satellitenbetreiber in einem größeren Umfang und über einem längeren Zeitraum gemietet. Der Teleportbetreiber wiederum zerteilt das Spektrum in kleinere Blöcke variabler Größe, welche dann an den Endkunden vermietet werden.

Aufgrund beispielsweise unterschiedlich langer Vertragsdauer, Ausfall eines Vertragspartners, Anmietung weiterer Kapazitäten, im Zuge der Umstellung von analoger hin zur digitalen Datenübertagung frei werdender Spektren (Stichwort: Digitale Dividende) und ähnlichem, kommt es schnell zu einem fragmentierten Spektrum. Das wird dann wirtschaftlich fatal, wenn die Summe der freien Positionen/Lücken im Spektrum und die Sendeleistung des Satelliten prinzipiell noch Kommunikationsdienste ermöglichen, dies aber aufgrund der Fragmentierung des Spektrums nicht möglich ist. Fragmentierte freie Bandbreite tritt in der Praxis also dann auf, wenn mehrere Kunden mit schmalbandigen Einzelverbindungen diese zu unterschiedlichen Zeitpunkten abkündigen. Dann wird neben der Transponderbandbreite natürlich auch das entsprechende Leistungsäquivalent frei. Ein überlegenes Verfahren ist in der Lage, diese freie Bandbreite und Leistung in Teilen oder insgesamt auch dann wirtschaftlich zu verwerten, wenn die Einzelblöcke für die Belegung mit neuen Kommunikationsverbindungen zwar zu klein sind, die Summe der verfügbaren schmalen Blöcke für den Betrieb jedoch hinreichend wäre. Als Quellen können hier State the Satellite Industrie Report (Satellite Industrie Association, June 2010), Satellite Communications & Broadcasting Markets Survey Forecasts to 2019 (Euroconsult 2010), Boeing Commercial Communications Satellites (GEO) 30. June 2010 und How Many Satellites Are Enough A Forecast of Demand for Satellites, 2004-2012 (Futron) angegeben werden.

### Kapazitätsbegrenzung durch analoge Störgrößen:

Physikalische, das heißt technische und fertigungsbedingte, Störmechanismen in den analogen Komponenten führen dazu, dass das Sende- bzw. Empfangssignal eine Vielzahl an verschiedenartigen Signalverzerrungen erfährt, hervorgerufen zum Beispiel durch Phasenrauschen, Gleichanteil, Frequenzversatz, Nichtlinearitäten, Jitter und I/Q Asymmetrie. Prinzipiell entstehen solche Störungen immer dort, wo analoge Baugruppen verwendet werden. In dem hier betrachteten Fall also in der Sendebodenstation, im Satellitentransponder und in der Empfangsbodenstation.
- *Sendebodenstation:* Nach der Digital-Analog-Wandlung folgen analoge Verarbeitungsstufen, wie z.B. das Mischen mit der Trägerfrequenz und die Signalverstärkung. Unvermeidlich führt dabei jede Stufe zu einer mehr oder weniger starken lineare und/oder nichtlineare Signalverzerrung. Während lineare Verzerrungen durch bekannte Verfahren beseitigt werden können und somit eine untergeordnete Rolle spielen, besteht noch ein großer Bedarf an der Vermeidung / Kompensation von nichtlinearen Verzerrungen. Besonders stark ist die nichtlineare Verzerrung bei einem gleichzeitigen Betrieb von mehreren Trägern, denn hier erfolgt vor der eigentlichen Störung additive Überlagerung der Signale.
- *Satellitentransponder:* Im Satellitentransponder sind viele analoge Baugruppen vorhanden, so dass hier ebenfalls Wechselwirkungen zwischen den einzelnen Trägern (adjacent channel intereference ACI) eintreten, was das Problem der nichtlinearen Verzerrung noch weiter verstärkt.
- *Empfangsbodenstation:* Prinzipiell entstehen in der Empfängerkette, d.h. vor der Signaldigitalisierung, ebenfalls Signalverzerrungen. Diese Verzerrungen sind aber im Vergleich zu den beiden anderen Quellen (Sendebodenstation und Satellit) als wesentlich kleiner zu betrachten und können in den meisten Fällen vernachlässigt werden.

Zusammenfassend betrachtet können als Hauptstörquellen die Sendebodenstation und/oder der Satellit gesehen werden. Der Beitragsumfang der beiden Positionen richtete sich dabei nach der jeweiligen Auslastung der beteiligten Bodenstation und des Satelliten. Wird z.B. von einer beteiligten Bodenstation nur ein Signal gesendet, der belegte Satellitentransponder ist aber voll ausgelastet, so ist die bodenseitige Verzerrung des Signals sehr gering, die induzierte Störung im Transponder hingegen sehr hoch.

Als Quellen können hier Abschlussbericht Studie Bundeswehr IT-Amt "Bandbreiteneffiziente Satellitenkommunikation" AUDENS Telecommunications Consulting GmbH, 2008, Abschlussbericht Studie Bundeswehr IT-Amt Referenznummer: E/IB2M/AA048/7F010 "Reduktion intermodulationsbedingter Kapazitätsverluste im Systemverbund SATCOMBw Stufe 2" NRADIOS GmbH, 2010, "Satellite Communications Systems", Gerard Maral, Wiley & Sons, 2009 sowie "RF Power Amplifiers for Wireless Communications", Steve C. Cripps, Artech House, 2006 benannt werden.

Ein weiteres Problem stellt das so genannte ASI (adjacent satellite interference) dar. Als ASI bezeichnet man den Signalanteil, den ein Satellit B von einer Bodenstation empfängt, obwohl diese Station nicht diesen Satelliten B sondern einen anderen Satelliten A ansprechen will (uplink) und auch umgekehrt (downlink). ASI ist ein Ergebnis unzureichender Antennengewinne (Strahlbündelung der Antennen) bzw. unzureichender Gewinnentkopplungen der Antennen aus Sicht des Empfängers (räumliche Trennung der Signale). ASI führt dazu, dass die Sendeleistung am Boden und am Satellitenausgang nicht beliebig erhöht werden kann, ohne fremde Satelliten bzw. fremde Bodenstationen zu stören.

Es ist leicht verständlich, dass sich beide Signalverzerrungen direkt auf die erreichbare Datenrate abbilden lassen, denn die damit einher gehenden Störungen reduzieren das Verhältnis von Nutzsignalleistung und Störsignalleistung am jeweiligen Empfänger.

Die nachfolgenden Abschnitte beschreiben den aktuellen Stand der Technik. Die aktuelle Durchführung von IOTs ist im Moment ein sehr langwieriger und zeitaufwändiger Prozess. Das liegt vor allem daran, dass das derzeitig auf dem Markt verfügbare Testequipment nicht in der Lage ist, effektive breitbandige Tests durzuführen. Zwar gäbe es die Möglichkeit, breitbandige Testsignale zu erzeugen, um die Messzeit zu verkürzen. Dem steht aber entgegen, dass die Messungen mit hoher Genauigkeit durchgeführt werden müssen, also mit einem hohen C/N (Carrier to Noise) oder SNR (signal-to-noise-ratio). Um ein sehr breitbandiges Signal mit hohem C/N zu erzeugen, müsste man breitbandig hohe Leistungen am Boden abstrahlen. Hier werden aber Grenzen von der Regulierungsbehörde (z.B. Frequenzmaske) vorgeschrieben. Zudem könnte das angestrebte Ziel, solche Messungen zeitgleich mit Nutzdatenverkehr im Transponder, damit offensichtlich nicht erreicht werden.

Momentan existieren zwei Ansätze diesem Problem zu entgegnen:
- Leistungsstarke, schmalbandige Träger
- Leistungsschwache, breitbandige Träger

### Schmalbandige Träger:

Im ersten, heute typischen, Fall generiert man ein schmalbandiges Testsignal, welches dann sukzessive von einer Testfrequenz zur nächsten verschoben wird, ähnlich eines Spektrumanalyzers. Dadurch entsteht naturgemäß eine lange Testphase, welche gleichbedeutend einer Downzeit des Satelliten ist und somit die entsprechenden wirtschaftlichen Konsequenzen nach sich zieht. Neben den offensichtlichen ökonomischen Nachteilen, sind mit diesem Ansatz auch verstärkt widersprüchliche bzw. schlecht vergleichbare Messergebnisse zu erwarten, die sich schlicht aus der zeitlichen Veränderung des Übertragungskanals während der Messungen ergeben (z.B. Wettereinflüsse). Diese Ergebnisse sind nicht falsch, verzerren aber den Blick und geben nicht die augenblicklichen Kenngrößen des Gesamtsystems wieder. Zudem werden im Allgemeinen enorme Anstrengungen unternommen, die Veränderungen im Übertragungskanal zeitgleich zu den IOTs zu vermessen und die IOT-Messergebnisse nachträglich zu kalibrieren.

Zu diesem Zweck müssen eigene technische Vorrichtungen vorgehalten werden, die mit erheblichen Investitionskosten verbunden sind. Für die überwiegende Anzahl von Betreibern von Teleports und von Kommunkationsverbindungen ist dies extrem unwirtschaftlich, weshalb IOTs heute nur von wenigen Dienstleistern mit großer Marktmacht angeboten werden.

### Breitbandiger Träger:

Neben dem sukzessiven Verschieben eines Testsignals existiert noch ein sog. Spread-Spectrum Ansatz, der einen Sinus-Träger mithilfe einer Sequenz breit aufspreizt und somit unter den (thermischen) Rauschpegel drückt. Auf diese Weise ist das Testsignal für bestehende Kommunikationsverbindungen im Träger nahezu unsichtbar, so dass diese auch während der Messungen weiter betrieben werden können. Am Boden wird nach der Entspreizung wieder ein sehr gutes C/N erreicht. Vorteil dieses Verfahrens ist, dass die Übertragung von Nutzdaten während der Messung weiter laufen kann, jedoch ist auch dieses Verfahren in Bezug auf die Messzeit nicht von Vorteil. Es wird deshalb vorwiegend für Monitoringzwecke verwendet. Zudem müssen auch für dieses Messverfahren eigene technische Vorrichtungen bereitgehalten werden, die heute ebenfalls mit sehr hohen Investitionskosten verbunden sind. Besonders aufwändig ist hierbei oft die Einspeisung des Testsignals in die bestehenden Sende- und Empfangswege der Nutzsignale, denn neben dem technischen Aufwand kommen zusätzliche Probleme der Kalibrierung hinzu. Um die eigentlichen Effekte des Satelliten von möglichen Einflüssen dieser bodenseitigen Signalwege zu separieren, müssen weitere Messungen an den Bodenstationen durchgeführt werden, die ebenfalls zu baulichen und technischen Veränderungen führen. Für viele Betreiber ist auch dies unwirtschaftlich, weshalb sie erneut die Dienstleistung bevorzugen.

Da die zulässige abgestrahlte Leistung regulatorisch limitiert wird, ist ein für die Satellitenkommunikation gut geeigneter Ansatz zur Erhöhung der Datenrate einer Kommunikationsverbindung nach dem Stand der Technik, der parallele Betrieb von mehreren Frequenzbändern/Kanälen gleichzeitig.

Die derzeitige bodenseitige Kommunikationstechnik erlaubt keine inhärente parallele Abarbeitung von mehreren Kanälen. Wenn man dies mit der aktuellen Modemtechnologie bewerkstelligen möchte, so ist der simultane Betrieb von mehreren individuellen Modems nötig. Dies bedeutet, dass an der Senderseite ein zu übertragender Datenstrom an mehrere Modems aufgeteilt, getrennt verarbeitet und nach der Analog-Digital-Wandlung am Ausgang jedes Modems synchron wieder zusammengeführt werden muss. An der Empfängerseite muss eine äquivalente inverse Operation durchgeführt werden.

Heutige Systeme verwenden bereits ein ähnliches, vereinfachtes Verfahren. Die zu übertragende Nutzerinformation wird bereits auf einer höheren Protokollschicht (IP-Ebene) mithilfe eines Routers oder Multiplexers auf mehrere Unterkanäle aufgeteilt und dann verschiedenen Standard-Einkanalmodems zugeführt. Besonders fortschrittliche Systeme integrieren diese Einkanalmodems in demselben Gehäuse, so dass für den Kunden der Eindruck "eines Modems" entsteht, obwohl die Signalströme untereinander keine Verbindung haben. Diese Variante stellt daher keine technologische Weiterentwicklung dar, sondern lässt sich als leicht veränderte Vermarktungsstrategie bezeichnen. Die vollständig unabhängigen Signalströme der verschiedenen Modems werden später über einen gemeinsamen Hochfrequenzpfad und dieselben Antennen zu einem, mehreren oder auch unterschiedlichen Empfängern übertragen. Dort finden dann die inversen Operationen statt.

Auch hier ist leicht einzusehen, dass das beschriebene Verfahren gleich mehrere Nachteile hat:
- Erhöhtes Gesamtgewicht der Bodenstationen (jedes einzelne Modem trägt dazu bei), insbesondere im mobilen oder transportablen Einsatz problematisch
- Erhöhter Stromverbrauch im Betrieb (jedes Modem verbraucht Strom und muss zusätzlich gekühlt werden), insbesondere im mobilen oder transportablen Einsatz problematisch
- Die Bodenstation muss stets auf den ungünstigsten Fall, d.h. auf die im Grenzfall maximal gleichzeitig zu übertragenden Datenströme, ausgelegt werden. Dies ist nicht die wirtschaftlichste Lösung, da der Beitrag der Modems zum Gesamtpreis linear mit der Anzahl der Datenströme ansteigt.
- Synchronisationsprobleme (die Funktionalität der Modems muss untereinander abgestimmt werden, hoher technologischer Aufwand; eine solche Lösung auf der physikalischen Schicht, d.h. vor/nach der DA/AD-Wandlung ist bisher nicht bekannt, weshalb heute auf die Verteilung der Informationen auf einer höheren Protokollschicht (IP-Ebene) zurückgegriffen wird)
- Erhöhte Störanfälligkeit (eine diskrete Realisierung ist aufgrund ihres Aufbaues anfälliger gegenüber mechanischen Einflüssen)

Im Bezug auf eine Erhöhung der Datenrate pro Satellit auch als Datendurchsatzerhöhung bezeichnet ist folgendes zu berücksichtigen. Die Spektrumsfragmentierung ist invers proportional zur sogenannten Fill-Rate, welche auch als load rate per Satellite oder utilisation rate bezeichnet wird. Die Fill-Rate beziffert die Auslastung eines Satelliten im Hinblick auf Frequenzspektrum und Sendeleistung und kann maximal 100% betragen.

Ist die Fragmentierung des Spektrums zu groß, bzw. unterschreitet die Fill-Rate eine vorgegebene Schranke so dass keine weiteren Dienste unterstützt werden können, obwohl in der Summe noch genügend Frequenzspektrum und Sendeleistung vorhanden ist, dann erfolgt eine Neuplanung der Kanal/Transponderbelegung oder auch der Satellitenbelegung. Diese Planung wird meist durch eine sehr erfahrene Person und softwaregestützt durchgeführt. Erschwerend kommt hinzu, dass schon bestehende Kommunikationsverbindungen möglichst nicht verändert werden sollen, da meist dem Endkunden eine feste Frequenz und Bandbreite vermietet wurde und/oder viele Satellitenterminals, insbesondere in Krisenregionen oder Regionen mit schlecht ausgebauter Infrastruktur heute unbemannt arbeiten.

Wenn die angesprochenen technischen Veränderungen durchgeführt werden müssen und dies nicht remote erfolgen kann, zieht das für den Betreiber der Kommunikationsverbindungen oft hohe Kosten nach sich, da er mit eigenem Personal meist nicht vor Ort ist und so Subkontraktoren beauftragen muss.

Weiterhin kommt hinzu, dass der Ansatz einer Neuplanung äußerst unflexibel ist, denn nur wenn es wirklich nötig ist, wird ein so großer Einschnitt in alle bestehenden Kommunikationslinks durchgeführt. Das heißt aber auch, dass ad-hoc bzw. kurzfristige Anfragen nach mehr Spektrum mit hohem finanziellem Aufwand verbunden sind. Oft wird der Betreiber des Systems kurzfristige Anfragen nach neuem Spektrum sogar ablehnen, da die erzielbaren Zusatzeinnahmen die Kosten für die Neuplanung aller bestehenden Verbindungen, auch als Line-Up bezeichnet, nicht decken.

Durch analoge Störgrößen kommt es bei der Verarbeitung von Datenströmen zu einer Kapazitätsbegrenzung. Voruntersuchungen haben gezeigt, dass die spektrale Effizienz der Satellitenverbindung insbesondere durch bandbreiteneffiziente Übertragungsverfahren wesentlich erhöht werden kann. Gleichzeitig ergab sich, dass, hervorgerufen durch nichtlineare Bauelemente, die maximale Datenrate verschiedener Verbindungen wesentlich durch intermodulationsbedingte Degradationen der Signalqualität begrenzt wird. Höhere Datenraten sind damit nur unter Inkaufnahme einer verringerten Leistungseffizienz der Bodenstation und/oder des Raumsegments realisierbar. Weiterhin müssen aufwendigen Verfahren zur Optimierung der Trägerbelegung unter Intermodulationsstörungen eingesetzt werden, wobei die Freiheitsgrade bei der Belegung und Kombinationen von schmalen bzw. schwachen Trägern pro Transponder deutlich eingeschränkt werden. Diese Freiheitsgrade sind jedoch in Systemen mit stark heterogener Architektur der zeitgleich zu betreibenden Bodenstationstypen (kleine und große Stationen, leistungsstarke und leistungsschwache Stationen, Stationen für Einzelverbindungen und Mehrkanalstationen etc.) von entscheidender Bedeutung.

Den Problemen der ACI begegnet man im Moment so, dass der Abstand zwischen den Sendefrequenzen pro Kanal entsprechend erhöht und unter Umständen die Sendeleistung reduziert wird. Letzteres führt dazu, dass die analogen Baugruppen dann in einem linearen Bereich arbeiten. Das Problem der ASI wird maßgeblich durch den Antennengewinn beeinflusst. Hier arbeitet man mit geografischer oder frequenzmäßiger Entkopplung der Ausleuchtgebiete sowie mit Limitierungen der erlaubten Sendeleistung. Beides führt aber direkt dazu, dass die Bandbreiteneffizienz/SNR signifikant reduziert wird und somit auch die erreichbare Datenrate.

Aus dem Stand der Technik ist hierzu die US 2002/131528 A1 bekannt, welche einen Demodulator zur Verwendung in einem Satelliten-Kommunikationssystem beschreibt. Dieser Demodulator weist eine Demultiplexer-Schaltung mit Schieberegistern sowie einen Schaltungsteil zur Signalwiederherstellung auf.

Die WO 2008/086414 A2 beschreibt ein Satelliten-Kommunikationssystem, welches mehrere Antennen an einem Teilnehmerendgerät zur Erzeugung von Datenströmen nutzt. Aus der US 6,233,433 B1 ist eine Anordnung und ein Verfahren für einen in Orbit Test eines Satelliten-Kommunikationssystems bekannt.

Dieser dargestellte Stand der Technik weist die oben beschriebenen Nachteile auf.

Der Erfindung liegt die Aufgabe zugrunde ein Verfahren zur parallelen Verarbeitung von Datenströmen mittels einer Satellitenkommunikationsverbindung anzugeben, mit welchem die erreichbare Datenrate/Datendurchsatz der Kommunikationsverbindung verbessert werden soll.

Gemäß der Erfindung wird die Aufgabe verfahrensseitig durch den Gegenstand des Anspruchs 1 gelöst.

In der Betriebsart für den Datenübertragungsbetrieb erfolgt eine parallele Verarbeitung mehrerer Datenströme zeitgleich in nur einer Anordnung. Die Verarbeitung umfasst eine Modulation, Mischung und Summation der Datenströme zu einem Gesamtdatenstrom sowie eine Digital-/Analog-Wandlung des Gesamtdatenstroms vor der Leistungsverstärkung und Abstrahlung des Signals mittels einer Antenne über eine Satellitenkommunikationsverbindung.

In einer Ausgestaltung des Verfahrens ist vorgesehen, dass in der Betriebsart nach der Erzeugung des Gesamtdatenstroms eine Reduktion von nichtlinearen Verzerrungen erfolgt, bevor der so veränderte Gesamtdatenstrom über die Satellitenkommunikations-verbindungen übertragen wird.

In der Betriebsart ist vorgesehen, eine Reduktion von nichtlinearen Verzerrungen des Gesamtsignals durchzuführen. Voraussetzung hierfür ist die parallele Verarbeitung der Datenströme sowohl emfänger- als auch senderseitig sowie Kenntnisse der statistischen Eigenschaften der Störprozesse wie Nichtlinearitäten und Phasenrauschen sowie des mit der Störgröße behafteten Signals. Auf dieser Grundlage erfolgt eine Schätzung einer Realisierung des Störprozesses (Trajektorie) und die entsprechende Entfernung aus dem Empfangssignal.

In einer weiteren Ausführungsform der Erfindung ist vorgesehen, dass in der Betriebsart vor der parallelen Verarbeitung mehrerer zu übertragender Datenströme eine Aufteilung eines Eingangs-Datenstroms auf mehrere zu übertragende Datenströme erfolgt.

Zur Erhöhung der Übertragungsdatenrate über einen Satelliten ist vorgesehen hochratige Datenströme in mehrere niederratige Datenströme aufzuteilen und dann über die Satellitenkommunikationsverbindungen zu übertragen. Dabei können die niederratigen Datenströme unterschiedlich bezüglich ihrer Datenrate, Codierung und Modulation sein.

Die Lösung soll nachfolgend anhand eines Ausführungsbeispiels näher erläutert werden. In den zugehörigen Zeichnungen zeigt
- Fig. 1: eine Darstellung eines Leistungsdichte-Frequenz-Diagramms mit mehreren Bodenstationen und Satellitentranspondern nach dem Stand der Technik,
- Fig. 2: einen Einfluss von nichtlinearen Verzerrungen auf das Diagramm aus Fig. 1,
- Fig. 3: eine vorgeschlagene Anordnung für eine IOT-Messung,
- Fig. 4: eine Prinzipdarstellung einer Anordnung zur Satellitenkommunikation nach dem Stand der Technik,
- Fig. 5: eine Prinzipdarstellung einer erfindungsgemäßen Anordnung zur Satellitenkommunikation mit einem INRADIOS-Modem,
- Fig. 6: eine Prinzipdarstellung der Innenbeschaltung des INRADIOS-Modems,
- Fig. 7: eine weitere Ausgestaltung des Modems aus Fig. 6 und
- Fig. 8: eine Prinzipdarstellung einer empfängerseitigen Anordnung zur Kompensation nichtlinearer Verzerrungen durch parallele Abarbeitung von Funksignalen.

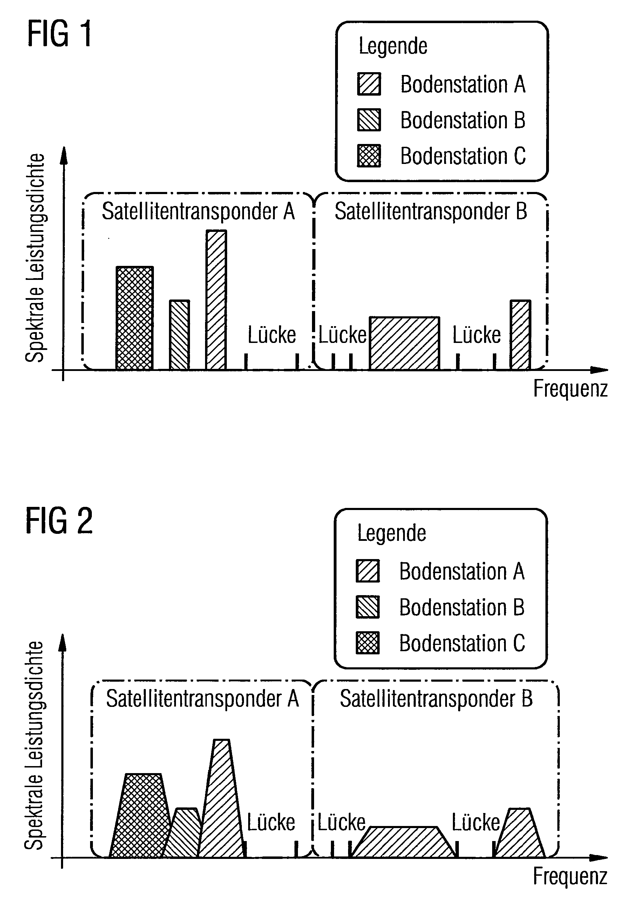

Kernlösungsansatz aller genannten Probleme ist die gleichzeitige parallele Verarbeitung von mehreren Kanälen/Frequenzbändern (auch transponderübergreifend) auf der physikalischen Schicht in einem Modem. Die Figur 1 zeigt dazu eine spektrale Leistungsdichte innerhalb eines Satellitentransponders bzw. über Transpondergrenzen hinweg.

Zu erkennen sind zwei Satellitentransponder A und B sowie Signale von drei verschiedenen Bodenstationen (A, B, C), wobei von der Bodenstation A drei Frequenzbänder abgestrahlt werden während von den Stationen B und C jeweils nur ein Band gesendet wird. Weiterhin sind Lücken eingezeichnet, welche die Fragmentierung des Spektrums verdeutlichen sollen. Mit dem aktuellen Stand der Technik wird an der Senderseite jedes Frequenzband separat durch ein Modem moduliert und an der Empfängerseite wieder durch ein Modem demoduliert.

Erfolgt nun eine nichtlineare Verzerrung der Signale, sei es während der Signalverarbeitung am Boden oder im Satelliten, so entsteht im Frequenzbereich eine Reduktion der Amplitude und eine Verbreiterung der Spektren, was zu den besagten Wechselwirkungen (spektrale Überlagerungen) zwischen den Trägern führt. In der Figur 2 ist dieser Effekt schematisch dargestellt.

Sind Interferenzen und/oder nichtlineare Verzerrungen im System vorhanden, so führt eine individuelle Abarbeitung der Träger durch einzelne Modems nicht zu einer Erhöhung der Datenrate, da laut dem Satz der Totalen Wahrscheinlichkeit nur eine vollständige Kenntnis des gesamten Signalgemisches aller an der Interferenz beteiligten Frequenzbänder die Rückschlusswahrscheinlichkeit auf das gesendete Signal maximiert und somit letztendlich eine höhere (maximale) Datenrate erlaubt. Ein Austausch von Informationen zwischen den Modems über die Signaleigenschaften der einzelnen Modems ist nicht vorgesehen.

Für einen effizienten und wirtschaftlichen IOT werden an dieser Stelle zwei mögliche Realisierungen einer verbesserten digitalen Signalverarbeitungseinheit an der Bodenstation vorgeschlagen:
- Die Bodenstation besitzt die technologische Fähigkeit, geeignete Sequenzen (z.B. Trainings/Korrelationssequenzen o.ä.) zu generieren und kann dann diese auf ein breitbandiges Signal modulieren. Zu beachten ist hierbei, ob eine solche Trainingssequenz unter Zugrundelegung der zulässigen abgestrahlten Leistungsdichte auch mit ausreichend C/N auswerten kann. Die von der Regulierungsbehörde maximal zulässige abgestrahlte Leistungsdichte ist aber für verschiedene Frequenzbänder unterschiedlich.
- Die Bodenstation verfolgt den Ansatz der gleichzeitigen Verarbeitung mehrerer Träger. Die Idee besteht darin, mehrere Trainingssequenzen zum IOT auf mehrere Träger aufzumodulieren und anschließend gemeinsam zu verarbeiten. Das wäre im Grenzfall dann eine Art gleichzeitiger Spektrumanalyzer über alle Frequenzen, so dass man die zu vermessenden Frequenzbänder nur einmal (kurz) belegen muss und anschließend am Boden (offline) das Ergebnis berechnet.

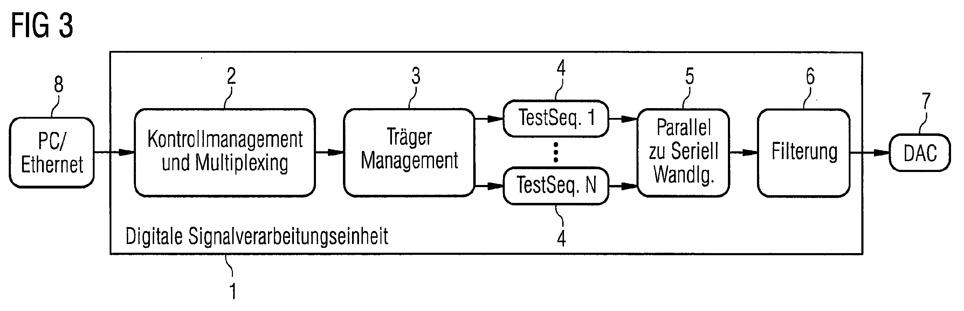

Besonders der letzte Aspekt soll hier weiter beschrieben werden, denn dieser erlaubt eine singuläre, schnelle parallele Vermessung und gleichzeitige Verarbeitung mehrerer Frequenzen/Träger. Hier liegt ein wesentlicher erfinderischer Gedanke, welcher nicht nur in der Parallelität der Verarbeitungsstrecke liegt, sondern auch in seiner Adaptivität und Agilität (benutzte Bandbreite, Trägerfrequenzen, Korrelationssequenzen usw.). Die Figur 3 zeigt hierzu einen allgemeinen schematischen Entwurf einer erfindungsgemäßen Sendeeinheit.

Über ein entsprechendes, in der Figur 3 nicht dargestelltes, Interface werden Initialisierungsdaten an die digitale Signalverarbeitungseinheit 1 übergeben. Im Beispiel werden diese Initialisierungsdaten mittels eines PC/Ethernet-Technologie 8 bereitgestellt.

Diese Initialisierungsdaten werden von einer Kontrollmanagement und Multiplexing Einheit 2 verarbeitet, welche eine nachgeschaltete Trägermanagementeinheit 3 ansteuert. Diese Trägermanagementeinheit 3 steuert die parallele, individuelle Generierung der Testsequenzen in den Testsequenzgenerierungseinheiten 4 für die unterschiedlichen Träger. Die einzelnen Träger werden in der nachgeschalteten Einheit zur Parallel-/Seriell-Wandlung 5 parallel/seriellgewandelt und in einem Filter 6 gefiltert. Die letzte Stufe der digitalen Signalverarbeitung 1 ist mit einer Einheit zur Digital-/Analog-Wandlung 7 verbunden.

An der Empfängerseite erfolgt eine äquivalente parallele/breitbandige Signalverarbeitung, deren Ergebnis eine Aussage über die zu testenden Größen liefert. Bei Bedarf kann hierzu eine aktuelle Liste der Parameter erzeugt werden.

Eine Weiterentwicklung dieser Technik ist das gleichzeitige Vermessen von mehreren Satelliten. Derzeitige, sich noch in der Startphase befindende, Forschungsprojekte beschäftigen sich mit der Fragestellung quasi Mehrantennenbetrieb (MIMO) mit verteilen Satelliten und/oder verteilten Bodenstationen zu untersuchen. Gerade beim MIMO-Betrieb ist eine exakte Kanalkenntnis von entscheidender Bedeutung. Das Durchfahren von allen Frequenzen und für alle möglichen Satelliten-zu-Boden-Kombinationen würde aber viel zu lange dauern, so dass hier eine parallele Verarbeitung zwingend notwendig ist. Die Verarbeitung würde sich dann auf die Prinzipien des Zeit-, Code-, Frequenzmultiplex beziehen.

Auch bei der Erhöhung der Datenrate pro Kommunikationsverbindung ist das zentrale Prinzip die parallele Abarbeitung von mehreren Kanälen/Frequenzbändern.

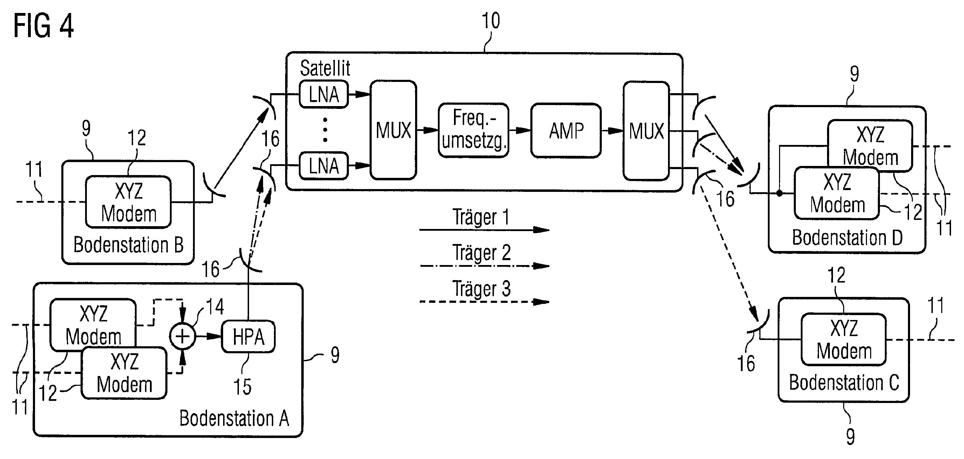

Zur Verdeutlichung der Idee ist in der Figur 4 die aktuelle Übertragungssituation anhand einer nicht vollständigen Prinzipskizze dargestellt. Die Begriffe HPA, LNA, MUX und AMP stammen aus dem Englischen und bedeuten
- HPA (high power amplifier, Hochleistungsverstärker),
- LNA (Low Noise Amplifier, Verstärker mit geringem Rauschanteil),
- MUX (Multiplexer/Demultiplexer) und
- AMP (Amplifier, spezieller Leistungsverstärker).

In der Figur 4 sind mehrere Bodenstationen 9 und ein Satellit 10 mit ihren wesentlichen funktionalen Baugruppen dargestellt. Einzelne oder mehrere eingangsseitige Datenströme 11 werden in den Bodenstationen 9 (auf der linken Seite der Figur 4 angeordnet) verarbeitet und dann zum Satelliten 10 geschickt. Dieser setzt die Träger um und sendet sie, eventuelle auch von unterschiedlichen Antennen, wieder zurück zur Erde an die auf der rechten Seite der Figur 4 angeordneten Bodenstationen 9 oder auch umgekehrt.

Nach dem Stand der Technik sind in einer Bodenstation 9 hierfür für jeden zu verarbeitenden Datenstrom 11 je ein Modem 12 angeordnet. Diese Modems 12 sind mit ihren Ausgängen auf eine Summationsanordnung 14 zur Erzeugung eines Summen-Sendesignals aufgeschaltet. Der Ausgang der Summationsanordnung 14 ist mit einem nachgeschalteten Hochleistungsverstärker 15 verbunden, welcher das über die nachgeordnete Antenne 16 abgestrahlte Sendesignal erzeugt.

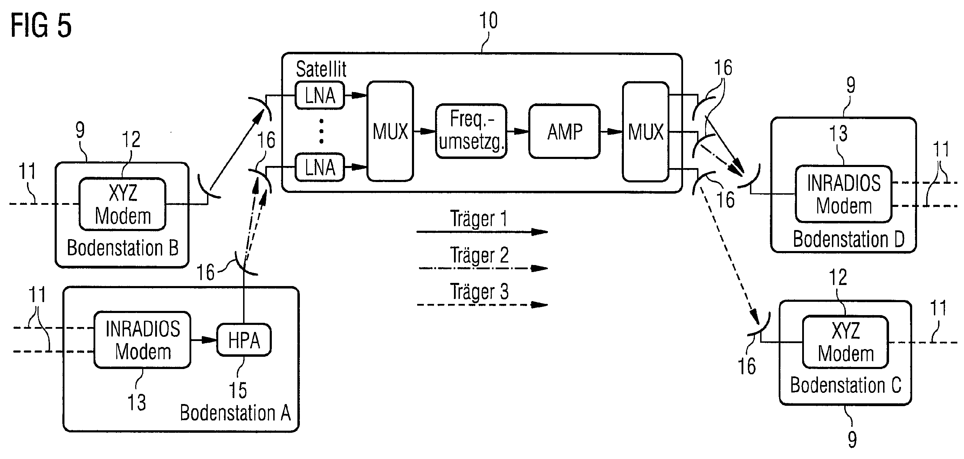

Erfindungsgemäß werden die Einzelmodems 12 in den Bodenstationen 9 durch ein INRADIOS-Modem 13 ersetzt, so dass sich eine Darstellung gemäß Figur 5 ergibt. Wie in der Figur 5 dargestellt, kann das erfindungsgemäße INRADIOS-Modem 13 mehrere Datenströme 11 verarbeiten und weist einen Ausgang für ein Summen-Sendesignal auf. Neben diesem Modem 13 können auch die aus dem Stand der Technik bekannten Modems 12 an der Kommunikation über den Satelliten 10 teilhaben, wie dargestellt.

Hierdurch ergibt sich eine Miniaturisierung und Integration von sonst einer Vielzahl von Modems in eine Produktlösung. Vorteile:
- Individuelle und einfache abstimmbare Bandbreitebelegung, Modulationsverfahren usw.
- Agile und adaptive Trägerbelegung
- Reduktion der geometrischen Abmessung und damit einhergehend Vorteile im Preis, Gewicht, Stromverbrauch usw.
- Evtl. könnte sich auch ein Gewinn in Bezug auf die Bitfehlerrate einstellen. Hintergrund dazu ist, dass vor allem in einer mobilen Anwendung frequenzselektives Fading eintreten kann. Eine Aufteilung des Frequenzbandes in mehrere parallele Unterträger führt zu Diversitätsgewinnen sowie letztendlich wieder zum Mehrträgerbetrieb mit all den Vorteilen, welche auch schon im Mobilfunk bekannt sind.

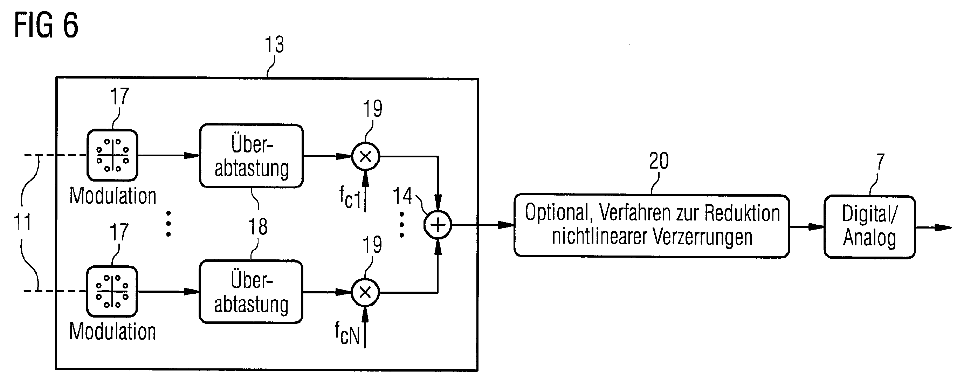

Die Abarbeitung innerhalb eines Modems 13 erfolgt dann nach dem in der Figur 6 dargestellten Schema. Hier ist auszugsweise nur der sendeseitige Modemteil dargestellt.

Die einzelnen Datenströme 11 werden innerhalb des Modems 13 in je einem Modulator 17 moduliert, und nach einer Überabtastung 18 in einer Mischstufe 19 auf ihre vorgegebene Frequenz gemischt sowie nachfolgend in einer Summationsanordnung 14 zusammengefügt.

Im Anschluss daran erfolgt optional eine Signalmanipulation in einer Anordnung zur Reduktion nichtlinearer Verzerrungen 20 um nichtlinearen Verzerrungen entgegenzuwirken. Erläuterungen hierzu folgen weiter unten.

Die Spektrumsfragmentierung und Neuplanung eines Satelliten stehen im ständigen Abgleich zwischen technischen/finanziellen Aufwand die Neuplanung durchzuführen und den Gewinnerwartung infolge freigelegter, zusätzlicher Ressourcen. Der folgende Ansatz behebt das Problem der Spektrumsfragmentierung erfindungsgemäß durch ein intelligentes, bedarfsgerechtes Aufteilen eines hochratigen Datenstroms 11 in eine Vielzahl paralleler niederratiger Ströme innerhalb eines Modems 13.

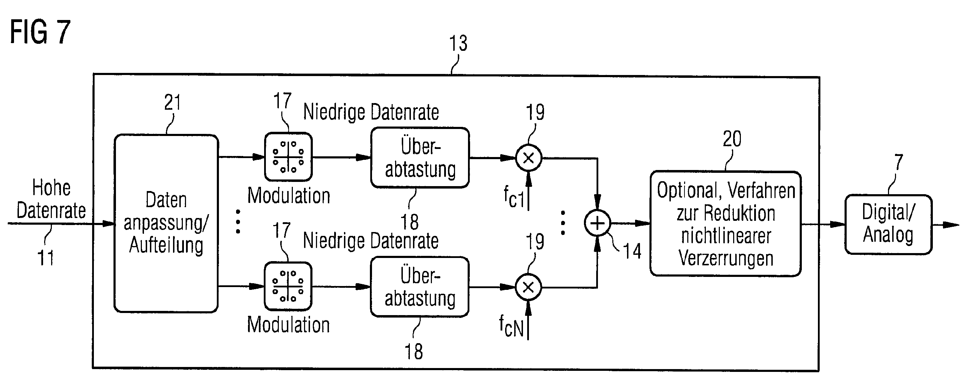

Wie in der Figur 7 dargestellt, erfolgt dazu in einer Datenanpassungs-/Aufteilungsstufe 21 eine Datenratenanpassung und Aufteilung des hohenratigen Datenstromes auf mehrere parallele Datenströme niederratige Datenströme.

Die Datenraten der einzelnen parallelen Datenströme können dabei unterschiedliche Wellenformen (Codierung und Modulation) aufweisen, welche durch den Nutzer vorgegeben werden. Denkbar ist auch eine softwaregestützte Planung bzw. Aufspaltung des Datenstromes durch das Modem selbst.

Die Vorteile der parallelen Verarbeitung sind nachfolgend aufgeführt:
- Die Fragmentierung des Spektrums wird signifikant reduziert.
- Die Auslastung/Fill-Rate des Satelliten kann signifikant erhöht werden und der Gesamtwirkungsgrad verbessert sich.
- Die Frequenzen können kurzfristig und adaptiv belegt werden.
- Schon existierende Träger müssen nicht oder nur kaum in ihrem Frequenz- und Leistungsslot geändert werden.
- Das Verfahren kann zusätzlich mit Verfahren zur Reduktion nichtlinearer Verzerrungen erweitert werden.
- Remotefähigkeit des Modems erlaubt eine Fernsteuerung und Fernüberwachung des Systems.

Beispielsweise durch eine entsprechende Analyse des Spektrums (Power Sensing, Cognitive Radio) können die freien Lücken im Spektrum entdeckt werden, die dann, je nach verfügbarer Leistung in der Bodenstation und im Satelliten, mit bestimmten Wellenformen belegt werden. Derart kann ein breiter oder hochratiger Datenstrom auf viele Subträger aufgeteilt werden.

Analoge Störeinflüsse gilt es, durch einen angepassten Systementwurf und/oder entsprechend gute Analogkomponenten zu vermeiden bzw. zu unterdrücken. Jedoch ist diese Vorgehensweise mit einem eventuellen Verlust an spektraler Effizienz und höheren Kosten verbunden. Während an Bodenstationen ein Austausch an Hardware prinzipiell immer möglich ist, ist dies bei einem im Betrieb befindlichen Satelliten offensichtlich ausgeschlossen. Um sich gleichzeitig die Möglichkeit zu erhalten, auch in der mehrjährigen Betriebsphase eines Satelliten von technologischen Neuerungen zu profitieren, soll ein Satellit technisch nicht zu speziell ausgelegt werden, sondern auf einem möglichst einfachen und universellen technischen Design basieren, so dass ein Höchstmaß an Zukunftssicherheit gewährleistet ist.

Dem tragen in erster Linie Ansätze Rechnung, welche komplexe Algorithmen und spezielle Systemdesigns auf die Bodenseite verlagern, während der Satellit erprobte und vergleichsweise einfache "transparente" Technologien beinhaltet. Ein unter dieser Prämisse abgeleiteter alternativer Ansatz zur Beherrschung bekannter Störeinflüsse ist daher, die analogen Störgrößen im System, welche die Sendebodenstation, der Satellit oder die Empfängerbodenstation sein können, bis zu einem gewissen Grad zuzulassen und damit kostengünstigere Bauteile und Systementwürfe zu ermöglichen.

Die dadurch auftretenden Signalverzerrungen werden dann erfindungsgemäß mit Hilfe von geeigneten Algorithmen an der Empfängerbodenstation digital kompensiert, so dass lediglich der Austausch des Empfangsmodems in der Bodenstation erforderlich ist.

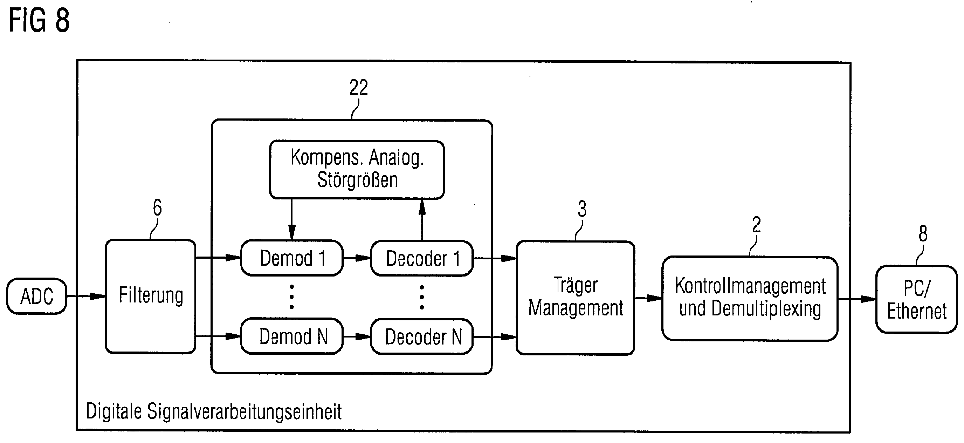

Grundvoraussetzung ist wiederum die parallele Abarbeitung von Funksignalen am Sender und/oder am Empfänger. Der Ansatz der Kapazitätserhöhung besteht darin, aus der Kenntnis der statistischen Eigenschaften des Störprozesses, beispielsweise von Nichtlinearitäten, Frequenzversatz, Inphasen/Quadraturphasen Versatz, Phasenrauschen usw. und des mit der Störgröße behafteten Signals, welches das Signal vom eigenen und/oder vom fremden Satelliten sein kann, eine Realisierung, eine sogenannte Trajektorie des Störprozesses zu schätzen, welche dann aus dem Empfangssignal entfernt wird. Je nach Art der Störung, von der einfachen additiven Überlagerung bis hin zur komplizierten Verschränkung verschiedenster Signalanteile, muss dann am Empfänger die jeweils inverse Operation durchgeführt werden. Eine Prinzipskizze dazu zeigt die Figur 8.

Hier erfolgt nach der Decodierung die Schätzung der Störung, welcher dann den Demodulatoren als zusätzliche Information zugeführt wird. Die Abbildung 8 zeigt somit das Prinzip einer Rückkopplungschleife, was in einer iterativen Vorgehensweise mündet. Die Schätzung der Trajektorie ist dabei vielfältig und hängt maßgeblich von den Systemanforderungen und der Rechenleistung der Zielplattform ab. Das hier beispielhaft vorgestellte iterative Verfahren ist ein im Sinne der Schätztheorie suboptimales Verfahren, hat aber den Vorteil einer mittleren Rechenkomplexität.

In der Figur 8 ist eine empfängerseitig angeordnete Baugruppe zur digitalen Signalverarbeitung 1 dargestellt, wobei dieser eingangsseitig ein Analog-/Digital-Wandler vorgeschaltet ist. Nach einer Filterung des Eingangssignals im Filter 6 erfolgt die oben beschriebene erfindungsgemäße Störungskompensation beruhend auf der Kenntnis der statistischen Eigenschaften des Störprozesses durch eine parallele Abarbeitung der Funksignale in der Kompensationsstufe 22. Dieser ist eine Trägermanagementeinheit 3 nachgeschaltet. Die ausgangsseitige Verbindung der Baugruppe zur digitalen Signalverarbeitung 1 mit einem beispielsweise nachgeschalteten PC 8 erfolgt über die Kontrollmanagement und Multiplexing Einheit 2 und ein entsprechendes Interface.

### Bezugzeichenliste

- 1: digitale Signalverarbeitungseinheit
- 2: Kontrollmanagement- und Multiplexing-Einheit
- 3: Trägermanagementeinheit
- 4: Testsequenzerzeugungseinheit
- 5: Einheit zur Parallel-/Seriell-Wandlung
- 6: Filter
- 7: Digital-/Analog-Wandlung
- 8: PC
- 9: Bodenstation
- 10: Satellit
- 11: Datenstrom
- 12: Modem
- 13: INRADIOS-Modem
- 14: Summationsanordnung
- 15: Hochleistungsverstärker
- 16: Antenne
- 17: Modulator
- 18: Abtastung
- 19: Mischstufe
- 20: Anordnung zur Reduktion nichtlinearer Verzerrungen
- 21: Datenanpassungs-/Aufteilungsstufe
- 22: Kompensationsstufe

## Patentansprüche

1. Verfahren zur parallelen Verarbeitung von Datenströmen mittels Satellitenkommunikationsverbindungen, wobei das Verfahren mit einer Betriebsart für einen Datenübertragungsbetrieb, bei welchem Nutzdaten in Form eines Datenstroms übertragen werden, betrieben wird, **dadurch gekennzeichnet, dass** in der Betriebsart eine parallele Verarbeitung mehrerer zu übertragender Datenströme, welche vor der parallelen Verarbeitung durch ein Aufteilen eines hochratigen Eingangs-Datenstroms (11) in eine Vielzahl niederratiger zu übertragender Datenströme innerhalb eines Modems (13) bereitgestellt werden und zueinander nicht identisch bezüglich ihrer Datenrate, Codierung und Modulation sind, erfolgt, wobei jeder Datenstrom unabhängig von einem weiteren Datenstrom in einem eigenen Signalpfad moduliert und auf eine vorgegebene Frequenz, welche mittels einer Analyse eines Spektrums nach freien Lücken in diesem Spektrum derart gewählt wird, dass eine der aufgefundenen Lücken mit einem Datenstrom belegt wird, gemischt wird und wobei nachfolgend alle modulierten und gemischten Datenströme zu einem Gesamtdatenstrom zusammengeführt und über die Satellitenkommunikationsverbindungen in Form eines Datenstroms über mehrere Träger übertragen werden.

2. Verfahren nach Anspruch 1, **dadurch gekennzeichnet, dass** in der Betriebsart nach der Erzeugung des Gesamtdatenstroms eine Reduktion von nichtlinearen Verzerrungen erfolgt und somit durch Phasenrauschen, Gleichanteile, Frequenzversatz, Nichtlinearitäten, Jitter oder I/Q Asymmetrien hervorgerufene Verzerrungen vermindert werden, bevor der so veränderte Gesamtdatenstrom über die Satellitenkommunikationsverbindungen übertragen wird.

## Claims

1. Method for the parallel processing of data streams by means of satellite communication links, wherein the method is operated using a mode of operation for a data transmission mode in which useful data are transmitted in the form of a data stream,
**characterized in that** the mode of operation involves the performance of parallel processing of a plurality of data streams that are to be transmitted that, prior to the parallel processing, are provided within a modem (13) by splitting a high-rate input data stream (11) into a multiplicity of low-rate data streams to be transmitted and are not identical to one another in terms of their data rate, coding and modulation, wherein each data stream is modulated, independently of a further data stream, in a dedicated signal path and mixed onto a prescribed frequency that is chosen, by means of analysis of a spectrum for free gaps in this spectrum, such that one of the gaps found is occupied with a data stream, and wherein subsequently all modulated and mixed data streams are conflated to produce a total data stream and transmitted via the satellite communication links in the form of a data stream using a plurality of carriers.

2. Method according to Claim 1, **characterized in that** the mode of operation involves the production of the total data stream being followed by nonlinear distortions being reduced and hence distortions caused by phase noise, Dc components, frequency offset, nonlinearities, jitter or I/Q imbalances being decreased before the total data stream altered in this manner is transmitted via the satellite communication links.

## Revendications

1. Procédé de traitement parallèle de flux de données au moyen de liaisons de communication par satellite, dans lequel le procédé est mis en oeuvre conformément à un mode de fonctionnement destiné à un fonctionnement de transmission de données lors duquel des données utiles sont transmises sous la forme d'un flux de données, **caractérisé en ce que**, dans ledit mode de fonctionnement, un traitement parallèle est effectué sur une pluralité de flux de données à transmettre qui sont fournis avant le traitement parallèle en divisant un flux de données d'entrée à haut débit (11) en une pluralité de flux de données de plus faibles débits à transmettre à l'intérieur d'un modem (13) et qui ne sont pas identiques les uns aux autres en ce qui concerne leur débit de données, leur codage et leur modulation, dans lequel chaque flux de données est modulé indépendamment d'un autre flux de données sur un trajet de signal propre et est mélangé à une fréquence prédéterminée qui est sélectionnée par analyse d'un spectre pour rechercher des espaces libres dans ledit spectre de manière à ce qu'un espace trouvé soit soumis à un flux de données, et dans lequel tous les flux de données modulés et mélangés sont ensuite rassemblés en un flux de données global et sont transmis sur plusieurs porteuses par l'intermédiaire des liaisons de communication par satellite sous la forme d'un flux de données.

2. Procédé selon la revendication 1,
**caractérisé en ce que**, dans ledit mode de fonctionnement, après génération du flux de données global, une réduction des distorsions non linéaires est effectuée pour ainsi réduire des distorsions dues à des bruits de phase, des composantes continues, un décalage de fréquence, des non-linéarités, une gigue ou des asymétries I/Q, avant que le flux de données global ainsi modifié soit transmis par l'intermédiaire des liaisons de communications par satellite.
